# EUROPEAN PATENT APPLICATION

(11) **EP 4 560 074 A1**
(43) Date of publication of application: **28.05.2025**
(21) Application number: 23887183.4
(22) Date of filing: 06.10.2023
(51) Int. Cl.: E01C 23/09

(54) **WATER SUPPLY DEVICE FOR BLADE**

(71) Applicant: Mikasa Sangyo Co., Ltd., Tokyo 101-0064 (JP)
(72) Inventor: SUZUKI, Sadahisa, Shiraoka-shi, Saitama 349-0203 (JP); SASAKI, Kouta, Shiraoka-shi, Saitama 349-0203 (JP); WARASHINA, Tomoya, Shiraoka-shi, Saitama 349-0203 (JP)
(74) Representative: Fédit-Loriot
(86) International application number: PCT/JP2023/036506
(87) International publication number: WO 2025/074604

(57) **Abstract**

Provided is a water supply device for a blade, which can continuously supply a sufficient amount of cooling water from a water supply tank to a blade and can smoothly execute the water supply work without fail during cutting work. The water supply device includes a pressure case 4 that surrounds outside an outer peripheral surface of a blade shaft 2, and forms a pressure chamber 45. In the pressure chamber 45, an impeller 8 is fixed to the outer peripheral surface of the blade shaft 2. A radially inner region inside the pressure chamber 45 communicates with a supply passage on an upstream side (introduction chamber 44, water supply tank, and etc.), which supplies cooling water to the pressure chamber 45. A radially outer region inside the pressure chamber 45 communicates with a supply passage on a downstream side (water feeding chamber 46, center water passage 21, and etc.), which supplies cooling water to the blade 6.

## Description

### Technical Field

The present invention relates to a device for supplying cooling water to a blade that is used for severing or cutting of asphalt pavements, concretes, stones, metals, or the like, and more particularly to a water supply device for a blade that can be applied to a working machine which is used by rotating the blade at high-speed, such as a concrete cutter (device for severing or cutting an asphalt pavement surface or a concrete surface of a road) used for road repair or removal work.

### Background Art

As a machine used for road repair and removal work, a concrete cutter that includes a water supply device for a blade, and configured so as to supply cooling water to both the left and right sides of the blade (referred to as "wet type concrete cutter") is known. The wet type concrete cutters can cool a disk and a chip of the blade during the cutting work, and can also prevent scattering of dust.

In the conventional wet type concrete cutters, a water supply system, in which a plurality of nozzles is disposed at positions near the blade (e.g. inside a blade cover), is adopted. In this system, the nozzles are connected with a water supply tank via a hose, and cooling water is sprayed onto both the left and right sides of the blade respectively. Another water supply system, in which a water passage is disposed inside a blade shaft (e.g. Patent Document 1), is also known. In this system, one end of the blade shaft is connected with a water supply tank, and cooling water is fed from this end to the opposite end via the water passage inside the blade shaft, so that the cooling water is supplied to both sides of the blade from a radially inward location of the blade and blade fixing means.

The conventional wet type concrete cutters generally use a method in which cooling water is supplied near the blade by gravity from a water supply tank (gravity water supply method). In this case, the water supply tank has to be installed at a position higher than the nozzles and the water passage inside the blade shaft. In a case of using a concrete cutter which does not use the gravity water supply method, or in a case where water cannot be supplied by gravity for any reason, water supply work is carried out using a water supply pump at the same time with the cutting work.

| | |
|---|---|
| Patent Document 1: | Japanese Patent No. 6120197 |
| Patent Document 2: | Japanese Patent Publication No. 2022-062420 |
| Patent Document 3: | Japanese Utility Model Publication No. S55-004114 |
| Patent Document 4: | Japanese Utility Model Publication No. S55-004113 |

### Summary of Invention

### Technical Problem

When performing cutting work using a wet type concrete cutter that uses gravity water supply method, a problem is that the supply pressure and the flow rate decrease as the water level in the water supply tank decreases. For example, if the residual amount of the cooling water in the water supply tank becomes low, the pressure and flow rate required for spraying the cooling water from the nozzles, or required for feeding the cooling water via the water passage inside the blade shaft and supplying the cooling water to the blade from a radially inward location of the blade and the blade fixing means, may not be acquired, and cooling water may not reach the blade. In this case, the blade cannot be cooled appropriately, and the blade may deteriorate and the service life of the blade may be shortened. Further, scattering of dust cannot be controlled.

Therefore, in order to maintain the pressure and flow rate that are required to supply the cooling water appropriately, the work to replenish water to the water supply tank is required simultaneously with the cutting work, or after interrupting the cutting work.

Further, in the case of performing the water supply work simultaneously with the cutting work using the water supply pump, a power source to operate the water supply pump (e.g. battery, commercial power supply, engine generator) need be separately provided, which is troublesome and costly. Furthermore, operation of the concrete cutter and operation of the water supply pump need be executed simultaneously, and executing these operations by one worker alone is difficult.

With the foregoing in view, it is an object of the present invention to solve these problems of the prior art, and to provide a water supply device for a blade that can continuously supply a sufficient amount of cooling water from the water supply tank to the blade and can smoothly execute the water supply work without fail during the cutting work.

### Solution to Problem

A water supply device for a blade according to the present invention is applicable to a device that severs or cuts an object by rotating a blade fixed to a blade shaft. The water supply device includes a pressure case that surrounds outside an outer peripheral surface of the blade shaft and forms an annular pressure chamber between the pressure case and the outer peripheral surface of the blade shaft. In the pressure chamber, an impeller is fixed to the outer peripheral surface of the blade shaft or is integrally formed with the blade shaft. A radially inner region inside the pressure chamber communicates with a supply passage on an upstream side, which supplies cooling water to the pressure chamber, and a radially outer region inside the pressure chamber is communicated with a supply passage on a downstream side, which supplies cooling water to the blade. By the impeller rotating inside the pressure chamber, pressure in the radially inner region inside the pressure chamber decreases, and the cooling water continuously flows into the pressure chamber from the supply passage on the upstream side, and at the same time, the pressure in the radially outer region inside the pressure chamber increases, and the colling water continuously flows out from the pressure chamber to the supply passage on the downstream side.

In this water supply device for the blade, it is preferable that a tangential direction passage, of which one end opens to the pressure chamber and which extends in a tangential direction of an inner peripheral surface of the pressure chamber, is connected to the pressure chamber, and the cooling water flows out from the radially outer region inside the pressure chamber to the supply passage on the downstream side by way of the tangential direction passage.

It is also preferable that the impeller includes a plurality of vanes, and each of the vanes is formed such that a front edge on a front side in a rotating direction is located on further toward the inner side in the radial direction than a rear edge on a rear side in the rotating direction, and moves fluid on the front side in the rotating direction toward the outer side in the radial direction during the rotation. It is also preferable that the blade shaft is rotatably supported by two bearings which are disposed with a space therebetween in a longitudinal direction, and the pressure case is disposed in a position between the bearings.

Further, it is preferable that an air vent hole for releasing air which may exist inside the pressure chamber is formed at a position higher than a position, where the radially inner region inside the pressure chamber and the supply passage on the upstream side communicate with each other.

It is also preferable that a water feeding chamber penetrated by the blade shaft is formed inside the pressure case, and the pressure chamber and the water feeding chamber are connected via a connection passage including the tangential direction passage. Here a center water passage which extends along a center axis of the blade shaft, a first radial direction water passage, of which one end opens on the outer peripheral surface of the blade shaft inside the water feeding chamber and the other end reaches the center water passage, and a second radial direction water passage, of which one end opens on the outer peripheral surface of the blade shaft on the inner side in the radial direction of blade fixing means and the other end reaches the center water passage, are formed inside the blade shaft. Also a flange passage which communicates from the outer peripheral surface of the blade shaft to the outer peripheral surface of the blade fixing means is formed between the blade fixing means and the blade, or inside the blade fixing means. By the impeller rotating inside the pressure chamber, the cooling water flowing out from the pressure chamber is supplied to the blade, by way of the connection passage, the water feeding chamber, the first radial direction water passage, the center water passage, the second radial direction water passage, and the flange passage.

Further, it is preferable that an introduction chamber penetrated by the blade shaft is formed inside the pressure case, the introduction chamber is connected with a water supply tank for supplying the cooling water, and alco communicates with the radially inner region inside the pressure chamber, so that the cooling water supplied from the water supply tank flows from the introduction chamber into the radially inner region inside the pressure chamber.

It is also preferable that a partition, having an opening through which the blade shaft is inserted, is formed between the pressure chamber and the introduction chamber inside the pressure case. Here an inner diameter of the opening in the partition is set to a dimension larger than an outer diameter of the blade shaft, and the radially inner region inside the pressure chamber and the introduction chamber communicate with each other by a gap between the opening and the blade shaft.

Furthermore, it is preferable that the impeller includes a plurality of vanes, and a space dimension between a front end of each of the vanes and the partition is set to 1.5 mm or less.

### Advantageous Effects of Invention

According to the water supply device for a blade of the present invention, a larger supply pressure and flow rate can be implemented compared with a conventional water supply device which feeds the cooling water using gravity. Further, a sufficient amount of cooling water can be continuously fed and supplied to the blade regardless the water level (residual amount of water) in the water supply tank. Furthermore, the water supply tank need not be installed at a high position, and may be installed at a position lower than the blade shaft. This means that an increase in design flexibility, in terms of the installation position of the water supply tank, can be expected.

The amount of the cooling water to be supplied to the blade is in proportion to the rotation frequency of the impeller, hence a large amount of cooling water (sufficient amount of cooling water for cooling the blade and also for preventing scattering of dust) can be appropriately supplied if the output of the power source (e.g. engine) is increased during the cutting work, with rotating the blade shaft and the impeller at high-speed. On the other hand, the amount of water to be supplied can be decreased during idling, which automatically conserves water.

### Brief Description of Drawings

Fig. 1 is a horizontal cross-sectional view of the water supply device 1 for a blade according to the present invention.
Fig. 2 is an enlarged cross-sectional view of the pressure case 4 indicated in Fig. 1.
Fig. 3 is a vertical cross-sectional view of the water supply device 1 sectioned along the III-III line indicated in Fig. 2.
Fig. 4 is a cross-sectional perspective view of the pressure case 4 sectioned along the IV-IV line indicated in Fig. 3.
Fig. 5 is a perspective view of the impeller 8 indicated in Fig. 1 to Fig. 3.
Fig. 6 is an enlarged cross-sectional view of the front end portion of the blade shaft 2 and the blade fixing means 3 indicated in Fig. 1.
Fig. 7 is a perspective view of the outer flange 32 of the blade fixing means 3 indicated in Fig. 6.
Fig. 8 is a vertical cross-sectional view depicting another configuration example of the pressure case 4 indicated in Fig. 2.
Fig. 9 is a cross-sectional perspective view depicting another configuration example of the pressure case 4 indicated in Fig. 2.

### Description of Embodiments

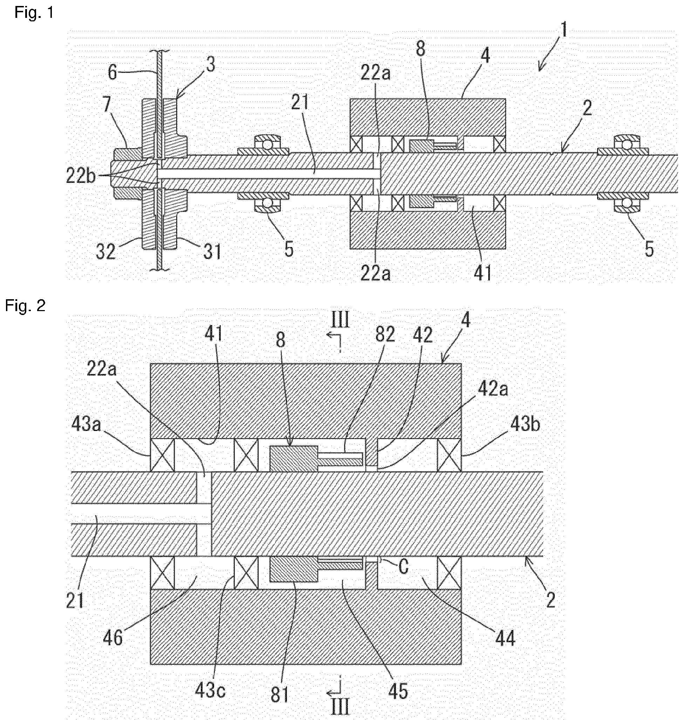

An embodiment of the present invention will now be described with reference to the accompanying drawings. Fig. 1 is a horizontal cross-sectional view of a water supply device 1 for a blade according to the present invention (an example of applying the present invention to a concrete cutter to sever or cut an asphalt pavement surface or concrete surface of a road). As illustrated in Fig. 1, this water supply device 1 is basically constituted of a blade shaft 2, blade fixing means 3, and a pressure case 4. Fig. 1 indicates a horizontal cross-section of each element at a height of a center axis of the blade shaft 2.

As illustrated in Fig. 1, the blade shaft 2 is rotatably supported by two bearings 5 which are disposed with a space in a longitudinal direction. The blade shaft 2 is configured to rotate at high-speed by receiving a driving force transferred from a motor (e.g. engine, electric motor), which is not illustrated here.

Inside the blade shaft 2, a center water passage 21, which extends along a center axis, is formed. Further, inside the blade shaft 2, radial direction water passages 22 (first radial direction water passage 22a, second radial direction water passage 22b), which extend in the radial direction, are formed. One end of each radial direction water passage 22 opens on an outer peripheral surface of the blade shaft 2, and the other end thereof reaches the center water passage 21. This means that the center water passage 21 formed inside the blade shaft 2 is communicated with an external space of the blade shaft 2 via the radial direction water passages 22.

At a front end of the blade shaft 2, means for fixing the blade 6 (blade fixing means 3) is disposed. The blade fixing means 3 is basically constituted of an inner flange 31 and an outer flange 32. The inner flange 31 is fixed to the blade shaft 2. The outer flange 32, on the other hand, is held between the inner flange 31 and a nut 7. As illustrated in Fig. 1, the blade 6 can be fixed to the blade shaft 2 by installing and tightening the nut 7 at the front end of the blade shaft 2 in a state of holding a blade 6 between the inner flange 31 and the outer flange 32.

In an intermediate portion (position between the two bearings 5) of the blade shaft 2, the pressure case 4, which surrounds outside of an outer peripheral surface of the blade shaft 2 and forms an annular small chamber (pressure chamber, and etc.) with the outer peripheral surface of the blade shaft 2, is disposed. Inside this pressure case 4, a cavity 41, of which cross-section is circular, is formed, and the blade shaft 2 is coaxially inserted into this cavity 41. An impeller 8 is also installed on the blade shaft 2.

Fig. 2 is an enlarged cross-sectional view of the pressure case 4 indicated in Fig. 1. As illustrated here, a partition 42 is formed inside the cavity 41 of the pressure case 4. A circular opening 42a is formed at the center of the partition 42. An inner diameter of this opening 42a is set to a dimension larger than an outer diameter of the blade shaft 2 that is inserted. In the present embodiment, the inner diameter dimension of the opening 42a is set to 32 mm, and the outer diameter dimension of the blade shaft 2 is set to 28 mm. This circular opening 42a is coaxial with the blade shaft 2, therefore if the blade shaft 2 is inserted into the cavity 41, a constant (2 mm) gap C is generated all around between the opening 42a and the blade shaft 2.

In the cavity 41, ring-shaped shaft seal members 43 (first shaft seal member 43a, second shaft seal member 43b, and third shaft seal member 43c) are disposed. These shaft members 43 are all contact types, and each is installed in a state where a lip portion on the inner periphery side contacts with the blade shaft 2 respectively, and an outer peripheral portion contacts with the inner peripheral surface of the cavity 41 respectively.

The first shaft seal member 43a is installed at an edge on one side of the cavity 41 (edge on the left side in Fig. 2, edge on the blade 6 side in Fig. 1). The second shaft seal member 43b is installed at an edge on the opposite side thereof (edge on the right side in Fig. 2). The third shaft seal member 43c is installed at a position between the first shaft seal member 43a and the partition 42.

Thus in the pressure case 4, the openings on both ends of the cavity 41 (portion between the inner peripheral surface of the cavity 41 and the outer peripheral surface of the blade shaft 2) are closed by the first shaft seal member 43a and the second shaft seal member 43b. Then the space inside the cavity 41 is partitioned into three small chambers by the shaft seal members 43a to 43c and the partition 42. Specifically, the cavity 41 is partitioned into an introduction chamber 44 between the second shaft seal member 43b and the partition 42, a pressure chamber 45 between the partition 42 and the third shaft seal member 43c, and a water feeding chamber 46 between the third shaft seal member 43c and the first shaft seal member 43a.

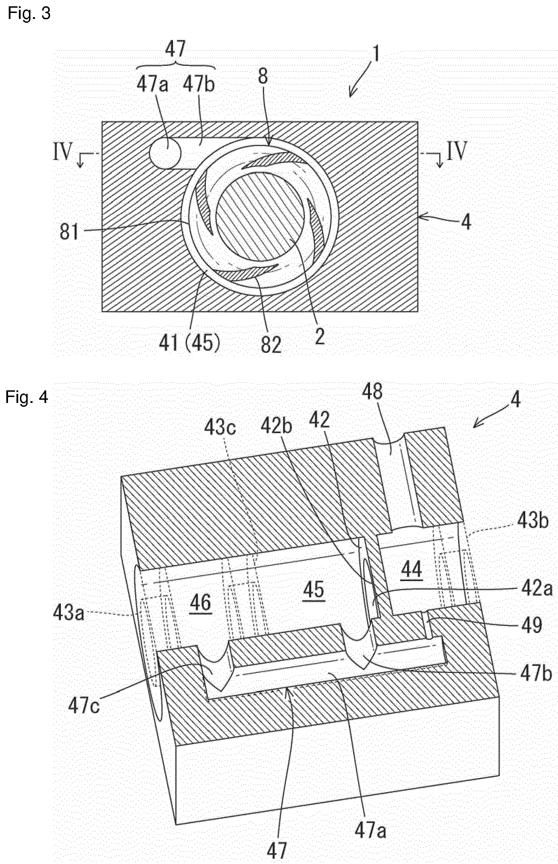

Fig. 3 is a vertical cross-sectional view of the water supply device 1 sectioned along the III-III line indicated in Fig. 2. Fig 4 is a cross-sectional perspective view of the pressure case 4 sectioned along the IV-IV line indicated in Fig. 3. As indicated in these figures, a connection passage 47 is formed inside the pressure case 4. This connection passage 47 is for connecting and communicating the pressure chamber 45 and the water feeding chamber 46. In the present embodiment, the connection passage 47 is constituted of a main passage 47a, a tangential direction passage 47b, and a communication passage 47c, as indicated in Fig. 4.

The main passage 47a extends outside the cavity 41 in the radial direction, from a position on a side of the introduction chamber 44 (direction perpendicular to the center axis of the blade shaft 2) to a position on a side of the water feeding chamber 46, so as to be parallel with the center axis of the blade shaft 2 (see Fig. 1 to Fig. 3).

As illustrated in Fig. 3, the tangential direction passage 47b extends in the tangential direction of the inner peripheral surface of the cavity 41 (pressure chamber 45), and one end of the tangential direction passage 47b opens to the pressure chamber 45, and the other end thereof opens to the main passage 47a. Hence the pressure chamber 45 and the main passage 47a are communicated via the tangential direction passage 47b. As illustrated in Fig. 4, one end of the communication passage 47c opens to the main passage 47a, and the other end thereof opens to the water feeding chamber 46. Hence the main passage 47a and the water feeding chamber 46 are communicated via the communication passage 47c.

As illustrated in Fig. 4, an introduction passage 48 is formed inside the pressure case 4. The introduction passage 48 is for guiding the cooling water from outside the pressure case 4 into the introduction chamber 44. One end of the introduction passage 48 opens to the outer side surface of the pressure case 4, and the other end thereof opens to the introduction chamber 44. The outer opening of the introduction passage 48 is connected to a water supply tank (not illustrated) via a hose, pipe, or the like.

Further, as illustrated in Fig. 4, an air vent hole 49 is formed between the main passage 47a and the introduction chamber 44. This air vent hole 49 is for releasing air which may exist inside the pressure chamber 45 and the connection passage 47 toward the introduction chamber 44, and thereby a sufficient amount of cooling water can be fed into the pressure chamber 45 and the connection passage 47 when the water supply device 1 is started.

A cross-sectional area of the air vent hole 49 is set to be much smaller compared with the cross-sectional areas of the gap C indicated in Fig. 2 (gap between the opening 42a of the partition 42 and the blade shaft 2) and of the connection passage 47.

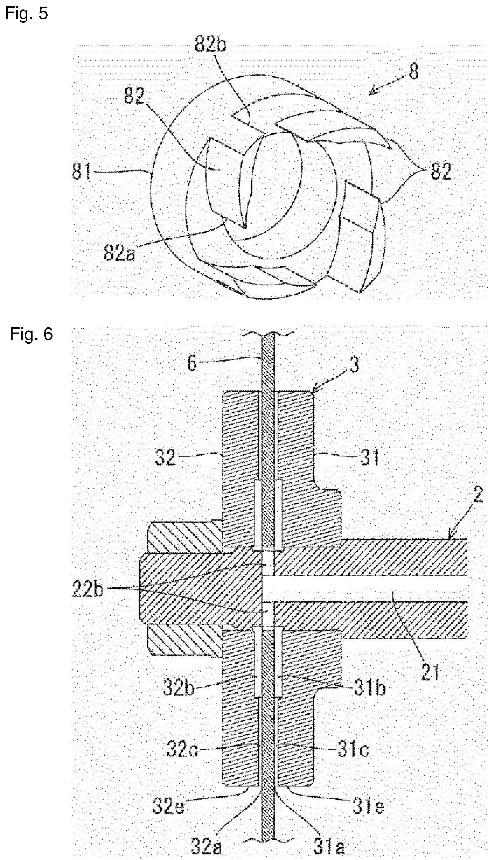

Fig. 5 is a perspective view of the impeller 8 indicated in Fig. 1 to Fig. 3. The impeller 8 is constituted of a cylindrical (or ring-shaped) base 81, and a plurality (four in this example) of vanes 82, which protrude from one side surface (surface perpendicular to the center axis) of the base 81 in a direction parallel with the center axis. As illustrated in Fig. 3, this impeller 8 is configured inside the pressure chamber 45, where the base 81 is fixed to the outer peripheral surface of the blade shaft 2, so as to rotate with the blade shaft 2 in a predetermined direction (counterclockwise in Fig. 3 and Fig. 5).

The vanes 82 of the impeller 8 are configured such that fluid existing in front of each vane 82 in the rotating direction is moved (pushed) to the outer side in the radial direction during rotation. Specifically, as illustrated in Fig. 5, each vane 82 is formed such that a front edge 82a (edge on the front side in the rotating direction) is located on the inner side in the radial direction of a rear edge 82b (edge on the rear side in the rotating direction).

Further, as illustrated in Fig. 2, the impeller 8 is disposed at a position where the front end portion of each vane 82 in the axial direction (right edge portion in Fig. 2) is close to the partition 42 as much as possible. The space dimension between each vane 82 and the partition 42 is preferably 1.5 mm or less, and is set to 0.8 mm in the present embodiment.

Now an operation mode of the water supply device 1 for a blade according to the present embodiment will be described. This water supply device 1 generates pressure to supply the cooling water from a water supply tank (not illustrated) to both surfaces of the blade 6, when a rotational driving force is supplied from a motor (not illustrated) to the blade shaft 2 (see Fig. 1 to Fig. 3), and the blade shaft 2 and the impeller 8 rotate in a predetermined direction (counterclockwise in Fig. 3).

This supply pressure is generated inside the pressure case 4. However, it is necessary that a sufficient amount of water exists in the pressure case 4. If no water exists in the pressure case 4, or if the amount of water is insufficient, a sufficient amount of water is introduced into the pressure case 4 first. Specifically, water is supplied from the water supply tank (not illustrated) to the introduction chamber 44 via the introduction passage 48 (see Fig. 4).

The introduction chamber 44 and the pressure chamber 45 adjacent thereto are partitioned by the partition 42, but the gap C (see Fig. 2) is formed between the opening 42a of the partition 42 and the blade shaft 2. Further, as illustrated in Fig. 4, the pressure chamber 45 is connected to the adjacent water feeding chamber 46 via the connection passage 47 (main passage 47a, tangential direction passage 47b, and communication passage 47c). Therefore, if a sufficient amount of water is supplied to the introduction chamber 44, the water flows into the pressure chamber 45 through the gap C, and further flows into the water feeding chamber 46 via the connection passage 47.

In a case where the water level in the introduction chamber 44 becomes higher than a highest portion 42b of the opening 42a of the partition 42 (see Fig. 4), it becomes difficult to supply a sufficient amount of water into the pressure chamber 45 and the connection passage 47, unless air, which exists in a space above the highest portion 42b of the opening 42a of the partition 42, out of the spaces in the pressure chamber 45, the connection passage 47 and the water feeding chamber 46 (hereafter called "upper space of the pressure chamber 45 and etc."), can be released. In this case, an air entrainment may be generated when the impeller 8 is rotated, and sufficient supply pressure and flow rate may not be obtained.

In the present embodiment, as mentioned above, the air vent hole 49 (see Fig. 4) is formed between the main passage 47a of the connection passage 47 and the introduction chamber 44, and this air vent hole 49 is formed at a position that is sufficiently higher than the highest portion 42b of the opening 42a of the partition 42, hence the air in the upper space of the pressure chamber 45 and etc. can be released toward the introduction chamber 44, and a sufficient amount of water can flow into the pressure chamber 45, the connection passage 47 and the water feeding chamber 46. As a result, the problem of the air entrainment can be appropriately avoided when the water supply device 1 is operating.

If the impeller 8 is continuously rotated in a state where a sufficient amount of water exists inside the pressure case 4 and where the water can be continuously supplied from the water supply tank (not illustrated) to the introduction chamber 44, the pressure on the upstream side of the impeller 8 decreases, and the pressure on the downstream side thereof increases. As a result, water can continuously flow from the water supply tank on the upstream side into the pressure case 4, and water can be continuously force-fed from the pressure case 4 to the blade 6 on the downstream side.

Specifically, when the impeller 8 is rotated, the water inside the pressure chamber 45 is stirred up by the vanes 82 (see Fig. 3 and Fig. 5), whereby a water flow that turns in this rotating direction is generated. Because of the centrifugal force applied to the turning water flow, and a function based on a shape of each vane 82 (a shape that allows the fluid that exists in front of each vane in the rotational direction to move radially outward), the pressure in the radially outer region inside the pressure chamber 45 (region along the inner peripheral surface of the pressure chamber 45) increases. On the other hand, the pressure in a radially inner region inside the pressure chamber 45 (region along the outer peripheral surface of the blade shaft 2) decreases.

As illustrated in Fig. 3, the tangential direction passage 47b opens on the inner peripheral surface of the pressure chamber 45. This tangential direction passage 47b extends in the tangential direction of the inner peripheral surface of the pressure chamber 45, hence the water turning in the radially outer region inside the pressure chamber 45 continuously flow into the tangential direction passage 47b by inertial force, and is further pushed out from the tangential direction passage 47b to the downstream side (main passage 47a, communication passage 47c, water feeding chamber 46, and etc.) by the pressure generated by the rotation of the impeller 8.

The radially inner region inside the pressure chamber 45, on the other hand, is communicated with the introduction chamber 44 (penetrated by the blade shaft 2) via the gap C (see Fig. 2) between the opening 42a of the partition 42 and the blade shaft 2, hence if the pressure in the radially inner region inside the pressure chamber 45 decreases, the pressure difference from the introduction chamber 44 generates water flow which moves from the introduction chamber 44 to the pressure chamber 45 through the gap C.

In the case where the space dimension between each vane 82 of the impeller 8 and the partition 42 is set to a large value, a part of the water that turns in the radially outer region inside the pressure chamber 45 may move to the radially inner region through the space between each vane 82 and the partition 42, and the pressure difference generated by the rotation of the impeller 8 (pressure difference between the radially outer region and the radially inner region inside the pressure chamber 45, the pressure difference between the radially inner region inside the pressure chamber 45 and the introduction chamber 44) may become small.

In the present embodiment, the space dimension between each vane 82 of the impeller 8 and the partition 42 is set to an extremely small value, as mentioned above, hence movement of water from the radially outer region and the radially inner region inside the pressure chamber 45 can be minimized, and the pressure difference generated by the rotation of the impeller 8 can be appropriately maintained.

As mentioned above, the water supply device 1 according to the present embodiment allows water to continuously flow into the pressure chamber 45 from the upstream side (introduction chamber 44, etc.) by the continuous rotation of the impeller 8 inside the pressure chamber 45, and can force-feed water from the pressure chamber 45 toward the downstream side (water feeding chamber 46, etc.).

The water pushed out from the pressure chamber 45 flows into the water feeding chamber 46, and is supplied from here to the blade 6 through the water passage formed inside the blade shaft 2. Specifically, as illustrated in Fig. 2, the blade shaft 2 is disposed so as to penetrate the water feeding chamber 46, and the center water passage 21, the first radial direction water passage 22a, and the second radial direction water passage 22b (see Fig. 1) are formed inside the blade shaft 2. Of these water passages, one end of the first radial direction water passage 22a opens to the water feeding chamber 46, and the other end thereof reaches the center water passage 21 as illustrated in Fig. 2. Hence the water flowing into the water feeding chamber 46 flows from the water feeding chamber 46 into the first radial direction water passage 22a by the pressure generated by the rotation of the impeller 8.

The first radial direction water passage 22a extends in the radial direction inside the blade shaft 2, hence if the blade shaft 2 rotates, the centrifugal force acts on the water inside the first radial direction water passage 22a. This centrifugal force becomes resistance when the water flows from the water feeding chamber 46 into the first radial direction water passage 22a (that is, when the water is moved from radially outside to radially inside). In the case of the water supply device 1 of the present embodiment, however, a sufficiently large supply pressure can be generated during normal work of a concrete cutter, which is an application target of the present embodiment, and thereby water can flow from the water feeding chamber 46 into the first radial direction water passage 22a without problems.

For example, if the blade shaft 2 and the impeller 8 are rotated at a normal work speed of a concrete cutter (3200 to 3600 rpm), a large supply pressure (24 to 28 kPa) can be generated. Therefore, water can flow from the water feeding chamber 46 into the first radial direction water passage 22a without problems against the centrifugal force that acts inside the first radial direction water passage 22a.

The water flowing into the first radial direction water passage 22a is fed to the second radial direction water passage 22b through the center water passage 21, and flows out of the blade shaft 2. As illustrated in Fig. 6 (enlarged cross-sectional view of the front end portion of the blade shaft 2 and the blade fixing means 3 indicated in Fig. 1), the second radial direction water passage 22b is formed at a radially inner position of the blade fixing means 3 (inner flange 31, outer flange 32) and the blade 6 which is fixed thereby.

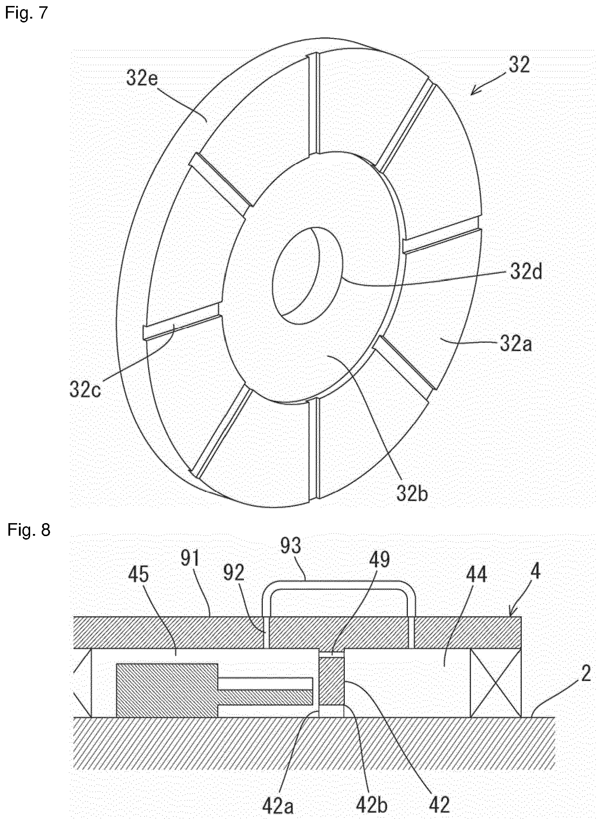

On the inner surface of the outer flange 32 of the blade fixing means 3 (surface on the side contacting with the blade 6), pressing portions 32a, a concave portion 32b and groove portions 32c are formed as illustrated in Fig. 7 (perspective view of the outer flange 32 of the blade fixing means 3 indicated in Fig. 6). Here the pressing portions 32a and the groove portions 32c are formed in a radially outer region on the inner surface of the outer flange 32, and the concave portion 32b is formed in a radially inner region (region between the pressing portions 32a and a through hole 32d to which the blade shaft 2 is inserted).

The pressing portions 32a are portions to secure the blade 6 by contacting and pressing the side surface of the blade 6, and are formed to be located on a same plane which is perpendicular to the center axis. The concave portion 32b and the groove portions 32c, on the other hand, are concaved from the plane of the pressing portions 32a in the thickness direction of the outer flange 32. Therefore, if the outer flange 32 is pressed against the side surface of the blade 6, only the pressing portions 32a contact with the side surface of the blade 6, and a space (gap) is formed between the outer flange 32 and the blade 6 in the area where the concave portion 32b and the groove portions 32c are formed.

The groove portions 32c are formed radially in the radial direction from the concave portion 32b to the outer peripheral surface 32e of the outer flange 32. Therefore, if the blade 6 is installed at the blade shaft 2, and the blade 6 is held and secured between the inner flange 31 and the outer flange 32, as illustrated in Fig. 6, a passage (flange passage), which communicates the outer peripheral surface of the blade shaft 2 and the outer peripheral surface 32e of the outer flange 32 through the concave portion 32b and the groove portions 32c, is formed between the outer flange 32 and the blade 6.

On the inner surface of the inner flange 31 as well, pressing portions 31a, a concave portion 31b and groove portions 31c are formed in the same manner (see Fig. 6) as the pressing portions 32a, and etc., indicated in Fig. 7. In other words, a passage (flange passage), which communicates the outer peripheral surface of the blade shaft 2 and the outer peripheral surface 31e of the inner flange 31 through the concave portion 31b and the groove portions 31c, is also formed between the inner flange 31 and the blade 6.

Hence the cooling water, that flows out of the blade shaft 2 at the radially inner position of the blade fixing means 3 and the blade 6, moves radially outward by the centrifugal force through the concave portions 31b, 32b and the groove portions 31c, 32c of the inner flange 31 and the outer flange 32, and cooling water is supplied to both surfaces of the blade 6 as a result.

As described above, the water supply device 1 according to the present embodiment is configured such that a radially inner region inside the pressure chamber 45 is communicated with the supply passage on the upstream side (introduction chamber 44, water supply tank, and etc.) which supplies the cooling water to the pressure chamber 45, and the radially outer region inside the pressure chamber 45 is communicated with the supply passage on the downstream side (water feeding chamber 46, center water passage 21, and etc.) which supplies the cooling water to the blade 6. Further, by rotating the impeller 8 inside the pressure chamber 45, the pressure in the radially inner region inside the pressure chamber 45 can be decreased, and cooling water can continuously flow into the pressure chamber 45 via the supply passage on the upstream side, whereas pressure in the radially outer region inside the pressure chamber 45 can be increased, and the cooling water can continuously flow out from the pressure chamber 45 to the supply passage on the downstream side. As a result, the cooling water can be appropriately supplied to both surfaces of the blade 6.

According to the water supply device 1 of the present embodiment, a larger supply pressure and flow rate can be implemented compared with a conventional water supply device which feeds the cooling water using gravity. Further, a sufficient amount of cooling water can be continuously fed and supplied to the blade 6, regardless the water level (residual amount of water) in the water supply tank. Furthermore, the water supply tank need not be installed at a high position, and may be installed at a position lower than the blade shaft 2. This means that an increase in design flexibility, in terms of the installation position of the water supply tank, can be expected.

The amount of the cooling water to be supplied to the blade 6 is in proportion to the rotation frequency of the impeller 8. Hence a large amount of cooling water (sufficient amount of cooling water for cooling the blade 6 and also for preventing scattering of dust) can be appropriately supplied if the output of the power source (e.g. engine) is increased during the cutting work, with rotating the blade shaft 2 and the impeller 8 at high-speed. On the other hand, the amount of water to be supplied can be decreased during idling, which automatically conserves water.

The water supply device 1 according to the present embodiment is operated by driving the blade shaft 2. Hence a dedicated power source is not required, and when the water supply device 1 is operated, the load that increases in the power source (e.g. engine, electric motor) of the blade shaft 2 is extremely low, and is almost unrecognizable.

In the above-mentioned embodiment, the impeller 8 is manufactured separately from the blade shaft 2, and is installed on the outer peripheral surface of the blade shaft 2. However, elements equivalent to the vanes 82 of the impeller 8 indicated in Fig. 5 may be integrally formed on the outside of the outer peripheral surface of the shaft, and this unit may be used as the blade shaft 2.

Further, in the above-mentioned embodiment, the air vent hole 49, to release air which may exist in the upper space of the pressure chamber 45 and etc., is formed at a position between the connection passage 47 and the introduction chamber 44 in the pressure case 4. However, as illustrated in Fig. 8 (enlarged vertical cross-sectional view indicating another configuration example of the pressure case 4), an air vent hole 49 communicating the pressure chamber 45 and the introduction chamber 44 may be formed at an upper part of the partition 42 (position higher than the highest portion 42b of the opening 42a). In this case as well, the air which may exist in the upper space of the pressure chamber 45 and etc. can be released toward the introduction chamber 44.

It is also possible, as illustrated in Fig. 8, that a vertical hole 92, which penetrates from an outer top surface 91 to the pressure chamber 45 (or the connection passage 47 or the water feeding chamber 46) in the pressure case 4, is formed, and one end of a hose 93 (or a pipe, or the like) is connected to an upper end opening of the vertical hole 92, and the other end thereof is connected to the introduction chamber 44 (or an element on the upper stream side of the introduction chamber 44, such as the introduction passage 48, or a hose or the like connecting the water supply tank and the introduction passage 48). In any case, the air vent hole 49 or an element equivalent thereto is formed or disposed at a position higher than a position where the radially inner region inside the pressure chamber 45 and the supply passage on the upstream side are communicated (the highest portion 42b of the opening 42a), thereby air which may exist in the upper space of the pressure chamber 45 and etc. can be released.

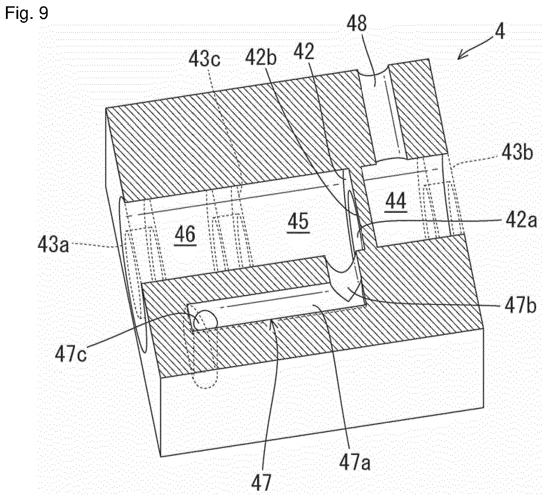

It is also possible, as illustrated in Fig. 9, that the communication passage 47c, out of the connection passage 47 connecting the pressure chamber 45 and the water feeding chamber 46, is configured to extend downward from the end portion of the main passage 47a, so as to communicate with the water feeding chamber 46 at a lower portion of the water feeding chamber 46 (at a position lower than the center axis of the blade shaft 2). In this case, even when the power source (e.g. engine) is temporarily stopped during the cutting work, the backflow of air from the water feeding chamber 46 to the pressure chamber 45 and the generation of air entrainment can be appropriately avoided.

Further, in the water supply device 1 of the above mentioned embodiment, the cooling water is supplied from the water feeding chamber 46 to the blade 6 through the water passage formed inside the blade shaft 2 (the center water passage 21 and the radial direction water passages 22), but nozzles may be disposed at positions inside a blade cover (not illustrated), which covers the blade 6 (preferably at a position from which the cooling water can be sprayed onto one side surface of the blade, and a position from which cooling water can be sprayed onto the other side surface of the blade), so that these nozzles and the tangential direction passage 47b (see Fig. 3) are connected via a hose or a pipe. In other words, the cooling water may be supplied to the blade 6, not through the passage inside the blade shaft 2, but via a passage formed outside the blade shaft 2.

Further, in the above-mentioned embodiment, the flange passages (concave portions 31b, 32b and groove portions 31c, 32c), which communicate the outer peripheral surface of the blade shaft 2 and the outer peripheral surfaces 31e, 32e of the blade fixing means 3, are formed between the inner flange 31 and the blade 6, and between the outer flange 32 and the blade 6 respectively, but the flange passages may be formed inside the inner flange 31 and the outer flange 32.

The water supply device 1 of the above-mentioned embodiment is applied to the concrete cutter which severs or cuts the asphalt pavement surface and the concrete surface of a road, but the application target of the present invention is not limited to the concrete cutter. In other words, the present invention can be widely applied to a device which severs or cuts the target by rotating a blade fixed to the blade shaft, and which supplying the cooling water to the blade and preventing scattering of dust are necessary or effective (e.g. metal working machine).

### Reference Signs List

- 1: Water supply device
- 2: Blade shaft
- 3: Blade fixing means
- 4: Pressure case
- 5: Bearing
- 6: Blade
- 7: Nut
- 8: Impeller
- 21: Center water passage
- 22: Radial direction water passage
- 22a: First radial direction water passage
- 22b: Second radial direction water passage
- 31: Inner flange
- 31a: Pressing portion
- 31b: Concave portion
- 31c: Groove portion
- 31e: Outer peripheral surface
- 32: Outer flange
- 32a: Pressing portion
- 32b: Concave portion
- 32c: Groove portion
- 32d: Through hole
- 32e: Outer peripheral surface
- 41: Cavity
- 42: Partition
- 42a: Opening
- 42b: Highest portion
- 43: Shaft seal member
- 43a: First shaft seal member
- 43b: Second shaft seal member
- 43c: Third shaft seal member
- 44: Introduction chamber
- 45: Pressure chamber
- 46: Water feeding chamber
- 47: Connection passage
- 47a: Main passage
- 47b: Tangential direction passage
- 47c: Communication passage
- 48: Introduction passage
- 49: Air vent hole
- 81: Base
- 82: Vane
- 82a: Front edge
- 82b: Rear edge
- 91: Outer top surface
- 92: Vertical hole
- 93: Hose
- C: Gap

## Claims

1. A water supply device for a blade, which is applied to a device that severs or cuts an object by rotating a blade fixed to a blade shaft, the water supply device for the blade comprising:
a pressure case that surrounds outside an outer peripheral surface of the blade shaft and forms an annular pressure chamber between the pressure case and the outer peripheral surface of the blade shaft, wherein
in the pressure chamber, an impeller is fixed to the outer peripheral surface of the blade shaft or is integrally formed with the blade shaft,
a radially inner region inside the pressure chamber communicates with a supply passage on an upstream side, which supplies cooling water to the pressure chamber,
a radially outer region inside the pressure chamber is communicated with the supply passage on a downstream side, which supplies cooling water to the blade, and
by the impeller rotating inside the pressure chamber, pressure in the radially inner region inside the pressure chamber decreases, and the cooling water continuously flows into the pressure chamber from the supply passage on the upstream side, and pressure in the radially outer region inside the pressure chamber increases, and the cooling water continuously flows out from the pressure chamber to the supply passage on the downstream side.

2. The water supply device for the blade according to claim 1, wherein
a tangential direction passage, of which one end opens to the pressure chamber and which extends in a tangential direction of an inner peripheral surface of the pressure chamber, is connected to the pressure chamber, and
the cooling water flows out from the radially outer region inside the pressure chamber to the supply passage on the downstream side through the tangential direction passage.

3. The water supply device for the blade according to claim 1, wherein
the impeller includes a plurality of vanes, and
each of the vanes is formed such that a front edge on a front side in a rotating direction is located on an inner side in the radial direction of a rear edge on a rear side in the rotating direction, and moves fluid on the front side in the rotating direction toward the outer side in the radial direction during the rotation.

4. The water supply device for the blade according to claim 1, wherein
the blade shaft is rotatably supported by two bearings which are disposed with a space therebetween in a longitudinal direction, and
the pressure case is disposed in a position between the bearings.

5. The water supply device for the blade according to claim 1, wherein
an air vent hole for releasing air which may exist inside the pressure chamber is formed at a position higher than a position, where the radially inner region inside the pressure chamber and the supply passage on the upstream side are communicated.

6. The water supply device for the blade according to any of claims 1 to 5, wherein
a water feeding chamber penetrated by the blade shaft is formed inside the pressure case,
the pressure chamber and the water feeding chamber are connected via a connection passage including the tangential direction passage,
a center water passage which extends along a center axis of the blade shaft, a first radial direction water passage, of which one end opens on the outer peripheral surface of the blade shaft inside the water feeding chamber and the other end reaches the center water passage, and a second radial direction water passage, of which one end opens on the outer peripheral surface of the blade shaft on the inner side in the radial direction of blade fixing means and the other end reaches the center water passage, are formed inside the blade shaft,
a flange passage which communicates from the outer peripheral surface of the blade shaft to the outer peripheral surface of the blade fixing means is formed between the blade fixing means and the blade, or inside the blade fixing means, and
by the impeller rotating inside the pressure chamber, the cooling water flowing out from the pressure chamber is supplied to the blade, through the connection passage, the water feeding chamber, the first radial direction water passage, the center water passage, the second radial direction water passage, and the flange passage.

7. The water supply device for the blade according to claim 1, wherein
an introduction chamber penetrated by the blade shaft is formed inside the pressure case,
the introduction chamber is connected with a water supply tank for supplying the cooling water, and also communicates with the radially inner region inside the pressure chamber, so that the cooling water supplied from the water supply tank flows from the introduction chamber into the radially inner region inside the pressure chamber.

8. The water supply device for the blade according to claim 7, wherein
a partition, having an opening through which the blade shaft is inserted, is formed between the pressure chamber and the introduction chamber inside the pressure case, and
an inner diameter of the opening in the partition is set to a dimension larger than an outer diameter of the blade shaft, and the radially inner region inside the pressure chamber and the introduction chamber are communicated by a gap between the opening and the blade shaft.

9. The water supply device for the blade according to claim 7, wherein
the impeller includes a plurality of vanes, and a space dimension between a front end of each of the vanes and the partition is set to 1.5 mm or less.
